# FASCICULE DE BREVET EUROPEEN

(11) **EP 1 879 407 B1**
(45) Date de publication et mention de la délivrance du brevet: **21.09.2011**
(21) Numéro de dépôt: 07013687.4
(22) Date de dépôt: 12.07.2007
(51) Int. Cl.: H04W 72/04

(54) **Procédé d'allocation de ressources radio dans un système de téléphonie mobile directe**
Verfahren zur Zuteilung von Funkressourcen in einem System für direkten Mobilfunk
Method for allocation of radio resources in a direct mobile telephony system

(30) Priorité: 12.07.2006 FR 0606395
(43) Date de publication de la demande: 16.01.2008
(73) Titulaire: SAGEMCOM ENERGY & TELECOM SAS, 92500 Rueil-Malmaison (FR)
(72) Inventeur: Dorion-Cousinat, Marc, 69009 Lyon (FR); De Graeve, Frédéric, 75017 Paris (FR); Dumont, Jérémie, 91190 Gif Sur Yvette (FR)
(74) Mandataire: Maillet, Alain

(56) Documents cités:
- WO-A-2006/016330
- WO-A2-2006/067683
- GB-A- 2 285 724

## Description

La présente invention concerne un procédé d'allocation de ressources radio pour l'établissement d'un appel émis sur une fréquence par une station mobile d'un système de téléphonie mobile directe du type où l'allocation desdites ressources consiste, en outre, à réserver, pour l'émission des données relatives audit appel, un des *slots* d'une trame qui divise dans le temps l'utilisation de ladite fréquence. La présente invention concerne également une station mobile d'un système de téléphonie mobile équipée de moyens permettant la mise en oeuvre d'un tel procédé et un système de téléphonie mobile directe dont chaque station mobile est équipée de tels moyens. Enfin, la présente invention concerne un programme d'ordinateur stocké sur un support d'informations qui est caractérisé en ce qu'il comporte des instructions permettant de mettre en oeuvre ledit procédé lorsqu'il est chargé et exécuté par ladite station mobile.

Un système de téléphonie mobile directe est un système de téléphonie mobile dans lequel chaque station mobile est susceptible d'émettre un appel sur une fréquence ou de recevoir un ou plusieurs appels simultanément émis par une (des) station(s) mobile(s) située(s) à sa portée.

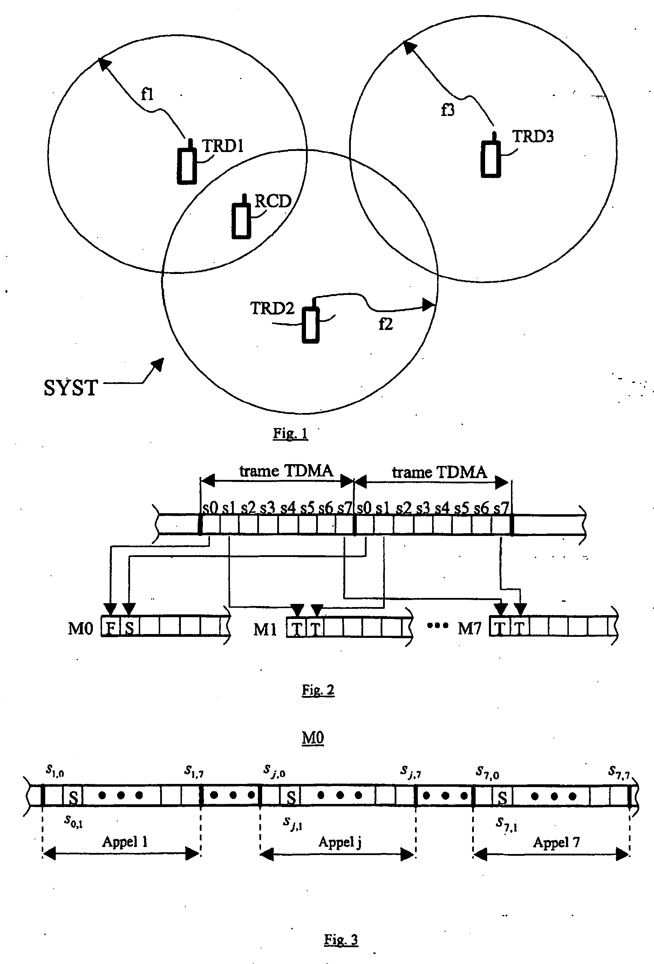

La Fig. 1 représente un schéma d'un exemple de système de téléphonie mobile directe SYST. Le système SYST comporte, selon cet exemple, une station mobile réceptrice RCD et trois stations mobiles TRD1, TRD2 et TRD3 qui émettent chacune un appel sur les fréquences porteuses respectives f1, f2 et f3. Chaque appel est émis par des signaux radiofréquences d'une puissance donnée qui définit une zone géographique dans laquelle l'appel peut être reçu. De telles zones géographiques sont représentées à la Fig. 1 par des cercles centrés sur chacune des stations émettrices TRD1, TRD2 et TRD3. Selon cet exemple, les stations émettrices TRDi (i=1,2) sont à portée de la station réceptrice RCD car la station RCD se trouve dans la zone géographique définie par l'intersection des cercles centrés sur la station mobile TRD1 et sur la station mobile TRD2. On peut noter que la station émettrice TRD3 n'est pas à portée de la station réceptrice RCD car cette dernière n'est pas dans le cercle centré sur la station TRD3.

Certains systèmes de téléphonie mobile directe permettent également que soient émis plusieurs appels sur une même fréquence. On parle alors de système à accès multiple par division de temps (Time Division Multiple Access).

On rappellera ci-dessous le fonctionnement d'un système de téléphonie mobile TDMA. On considèrera également le cas particulier d'un système GSM afin de préciser ce fonctionnement. On entend par système GSM dans la suite de la description un système de téléphonie mobile qui est basé sur les normes bien connues du GSM (Global System for Mobile communication). On rappellera également que le système GSM n'est pas un système de téléphonie directe mais un système cellulaire du fait que chaque station mobile doit se rattacher à une station de base (dont la couverture définit une cellule) afin de pouvoir communiquer avec une autre station mobile même si ces deux stations mobiles sont géographiquement proches l'une de l'autre.

Dans un système de téléphonie mobile du type TDMA, les données échangées entre stations émettrice et réceptrice sur une même fréquence sont transmises sous forme de données numériques dans des intervalles de temps (time slots). On utilisera le terme *slot* pour désigner un tel intervalle de temps car c'est le terme qui est utilisé par l'homme du métier. On l'écrira en italique pour toutefois marquer son origine anglosaxone. L'accès TDMA permet donc à différents utilisateurs de partager, au cours du temps, l'utilisation d'une fréquence (ou plus précisément une bande de fréquence) donnée, partage qui est défini par une trame dite trame TDMA qui fixe la disposition temporelle des *slots* de chaque fréquence attribuée à ce système de téléphonie mobile. La trame TDMA est, dans le cas particulier d'un système GSM, un ensemble constitué de huit *slots* successifs notés s0 à s7 à la Fig. 2.

Une multitrame Mⱼ à NT *slots* de trames est une structure qui est souvent utilisée dans les systèmes de téléphonie mobile de type TDMA pour permettre de repérer un *slot* sur une échelle supérieure à la durée de la trame TDMA. Cette structure est définie sur une succession de *slots* sⱼ d'un même rang donné j de NT trames TDMA successives, c'est-à-dire sur un canal physique. Comme illustré à la Fig. 2, les *slots* s₀ de trames successives forment la multitrame M₀, les *slots* s₁ des trames successives forment la multitrame M₁, etc.

De plus, dans le cas particulier d'un système GSM, pour permettre à une station mobile de se rattacher à la station de base la plus favorable, de s'y caler en fréquence et de s'y synchroniser en temps, une voie balise, portée par la seule multitrame M₀ d'une fréquence particulière parmi toutes les fréquences disponibles, est également mise en oeuvre.

On rappelle ici que cette voie balise est émise, par chaque station de base du système GSM, sur une fréquence particulière, dite fréquence balise, choisie parmi l'ensemble des fréquences porteuses attribuées à la station de base concernée.

La voie balise d'un système GSM comprend les canaux logiques suivants émis en diffusion : le canal FCCH (Frequency Correction CHannel), le canal SCH (Synchronisation CHannel) et le canal BCCH (Broadcast Control CHannel). Le canal FCCH est émis au cours du *slot* s₀ de quelques trames prédéfinies, par exemple les seules trames 0, 10, 20, 30 et 40 d'une multitrame à 51 *slots* de trames (marqué F à la Fig. 2). Le canal SCH est émis au cours du *slot* s₀ de la trame qui suit celle où a été émis le canal FCCH, par exemple dans les seules trames 1, 11, 21, 31 et 41 d'une multitrame à 51 trames (marqué S à la Fig. 2). La multitrame M₀ de la fréquence balise est ainsi formée et est appelée dans la suite de la description multitrame système.

Dans un système GSM, pour la transmission des données utilisateur, la station de base à laquelle est rattachée une station mobile indique à celle-ci deux *slots* respectivement émis sur deux fréquences porteuses duales : l'une affectée à la transmission dans le sens montant (station mobile vers station de base) et l'autre affectée à la transmission dans le sens descendant (station de base vers station mobile). Ces données utilisateur (marqués T à la Fig. 2) peuvent être des données utiles et elles sont alors transmises dans des canaux logiques appelés TCH (Traffic CHannel) ou être des données de signalisation et elles sont alors transmises dans des canaux logiques appelés SDCCH. Des canaux logiques de contrôle peuvent accompagner ces canaux logiques : SACCH (Slow Associated Control CHannel) et FACCH (Fast Associated Control CHannel). Ces données étant spécifiques à l'utilisateur, les canaux logiques qui les portent sont dits canaux dédiés. Tous ces canaux logiques dédiés sont portés par les multitrames M₀ à M₇ (exceptée la multitrame M₀ de la fréquence balise) que nous nommerons, dans la suite de la présente description, multitrames utilisateur.

Dans un système GSM, lorsqu'elle est mise sous tension, une station mobile scrute l'ensemble des fréquences porteuses susceptibles d'être des fréquences balises qu'elle reçoit pour y chercher un signal qui correspond à un canal FCCH. Une fois celui-ci trouvé, elle peut, d'une part, ajuster sa fréquence d'émission/réception, mais aussi, d'autre part, en déduire une position temporelle, si bien qu'elle peut se caler sur la trame reçue sur cette fréquence balise. Elle peut alors lire, à la trame suivante, dans le *slot* s0 correspondant, le canal SCH dans lequel elle trouvera toutes les données nécessaires pour parfaire sa synchronisation temporelle sur les trames. Elle peut alors lire le canal BCCH qui la renseignera sur les caractéristiques de la station de base avec laquelle elle est synchronisée et les méthodes pour y accéder, ainsi que les caractéristiques et méthodes des stations de base voisines.

Dans cet état, la station mobile peut déclencher l'établissement d'une connexion, normalement par accès au canal commun RACH ou répondre à un signal de paging présent sur le canal PCH. La station de base à laquelle cette station mobile est rattachée émet alors sur le canal AGCH (Access Grant CHannel) les ressources radio (canal dédié SDCCH ou TCH) qui sont allouées à cette station mobile pour l'établissement de cette connexion. La connexion est alors établie entre le réseau GSM et la station mobile une fois que cette station a basculé sur le canal dédié SDCCH ou TCH.

On peut noter que dans un système GSM la gestion de l'allocation des ressources est centralisée.

Une fois une connexion établie, la station mobile reçoit les canaux FCCH, SCH et BCCH non seulement de la station de base à laquelle elle est rattachée mais aussi des stations de base voisines. Elle peut ainsi, selon les circonstances, se rattacher à la station de base la plus favorable au moment considéré.

Un système de téléphonie mobile directe à accès multiple par division de temps, objet de la présente invention, n'est pas un système cellulaire, c'est-à-dire que la notion de cellule définie par chaque station de base n'existe pas. Cependant, deux stations mobiles d'un tel système, l'une émettrice d'un appel sur une fréquence porteuse et l'autre réceptrice de cet appel, doivent toutefois, pour que la station mobile réceptrice puisse écouter cet appel, se caler sur cette fréquence porteuse, et être temporellement synchronisées avec la station mobile émettrice. De plus, de manière à ce que deux stations émettrices d'appels sur la même fréquence ne se perturbent pas mutuellement, ces stations émettrices doivent également partager la même donnée de synchronisation S. Ainsi, chaque station mobile émettrice émet sur une fréquence porteuse non seulement ses données utilisateur mais aussi des données de calage en fréquence et de synchronisation en temps. Dans le cas où un tel système de téléphonie directe est basé sur les normes GSM, une station mobile émettrice émet dans un des *slots* s1 à s7 de chaque trame TDMA relative à une fréquence porteuse, des données utilisateur (canal logique TCH), dans le *slot* 0 de certaines trames TDMA les données de calage en fréquence (canal FCCH) et dans le *slot* 0 d'autres trames TDMA les données de synchronisation S (canal SCH).

La Fig. 3 représente un exemple de multitrame M₀ d'un système de téléphonie mobile directe basé sur les normes GSM.

Selon cet exemple, la multitrame système M₀ de chaque fréquence attribuée au système de téléphonie mobile directe est dédiée en outre à l'émission des mêmes données de-synchronisation S. La multitrame M₀ est généralement une multitrame à *51 slots* de trames. Selon cet exemple, sept appels Aⱼ (j=1 à 7) peuvent être simultanément supportés par chaque fréquence attribuée. Les ressources radio nécessaires à l'établissement de l'un de ces sept appels Aⱼ sont en outre constituées d'une fréquence porteuse, d'un *slot* sⱼ de la trame TDMA à partir duquel une multitrame utilisateur Mⱼ est formée, généralement une multitrame à 26 *slots* de trame (non représentée sur la Fig. 3), et sept *slots* s_{j,k} (k=1 à 7) de la multitrame système M₀.

Toujours selon cet exemple, le *slot* s_{j,1} est le *slot* dit *slot* de synchronisation car c'est au cours de ce *slot* que les données de synchronisation S sont émises par la station émettrice TRDj de l'appel Aⱼ et les autres *slots* s_{j,k} (k≠1) sont réservés pour l'émission d'autres informations relatives au fonctionnement du système de téléphonie mobile directe.

Une telle définition de la multitrame système M₀ permet donc que les mêmes données de synchronisation S soient connues, en particulier, des stations mobiles émettrices d'appel sur une même fréquence attribuée. Ainsi, les station émettrices d'appel sur la même fréquence émettent toutes les mêmes données de synchronisation S sur le *slot* de synchronisation s_{j,1} relatif à l'appel Aⱼ que chacune de ces stations émet.

WO2006/016330 décrit un système de communication en mode direct dans lequel deux terminaux communiquant sélectionnent une fréquence libre pour communiquer.

GB 2 285 724 décrit aussi un système de communication en mode direct basé sur le TDMA. Les stations mesurent l'activité sur un time slot en choisissent un time slot libre pour établir une communication directe.

WO2006/067683 décrit un système d'allocation de fréquences entre 2 terminaux en mode direct. Le choix du time slot alloué est fait parmi les time slots libres et est dépendant de la distance entre les terminaux.

Le problème résolu par la présente invention est de prévoir un procédé d'allocation de ressources radio pour l'établissement d'un appel émis sur une fréquence par une station mobile d'un système de téléphonie mobile directe du type où l'allocation desdites ressources radio consiste en outre à réserver, pour l'émission des données relatives audit appel, un des *slots* d'une trame qui divise dans le temps l'utilisation de ladite fréquence tel que décrit dans la revendication 1.

Selon un premier mode de réalisation de ladite étape d'obtention de fréquences, chaque fréquence obtenue sur laquelle ledit appel est susceptible d'être émis est une fréquence sur laquelle ledit appel est autorisé à être établi.

Ce mode est avantageux pour un fournisseur de service d'appels directs car il lui permet de réserver certaines fréquences à des usages particuliers tels que l'émission d'appels correspondant à des numéros d'urgence.

Selon un deuxième mode de réalisation de ladite étape d'obtention de fréquences, au moins une fréquence est obtenue suite à l'envoi d'une requête de ladite station mobile vers une autre station mobile.

Ce mode de réalisation est avantageux car il permet au fournisseur de service d'appels directs de pouvoir déléguer la responsabilité de l'allocation de fréquences parmi les fréquences attribuées au système de téléphonie mobile directe à certaines stations mobiles du système de téléphonie directe. Le fournisseur peut alors, par exemple par zone géographique, déléguer la sélection de ces fréquences sur cette zone géographique à une ou quelques stations mobiles habituellement présentes dans cette zone géographique.

Selon un troisième mode de réalisation, au moins une fréquence est obtenue à partie d'une mémoire de ladite station mobile.

Ce mode de réalisation est avantageux car il permet à une station mobile de sélectionner une fréquence par elle-même sans avoir à recourir à une quelconque requête vers une autre station mobile du système de téléphonie directe.

Selon un premier mode de réalisation de ladite étape d'inspection de fréquence, le niveau de champ ou de la qualité des signaux modulés par chacune desdites fréquences obtenues et reçus par ladite station mobile est mesuré.

Dans ce cas, selon un mode de réalisation de ladite étape de sélection de fréquences, une fréquence ainsi inspectée est sélectionnée selon la valeur de la mesure du niveau de champ ou de la qualité des signaux reçus qu'elle module.

Ce mode de réalisation de ladite étape de sélection de fréquence est avantageux car il permet de contrôler l'étendue de la zone géographique sur laquelle les stations mobiles du système de téléphonie mobile directe qui émettent sur ladite fréquence sélectionnée sont toutes synchronisées entre elles en temps.

D'un certain côté, l'obtention d'un maximum de stations mobiles synchronisées entre elles en temps est bénéfique quant au fonctionnement du système de téléphonie directe car il permet d'éviter les problèmes de collisions asynchrones d'accès simultané aux mêmes ressources radio qui peuvent se produirent lorsque des stations non synchronisées se rapprochcnt l'une de l'autre. En sélectionnant la fréquence reçue qui correspond au niveau de champ ou de qualité de signal le plus faible parmi les niveaux des fréquences reçues, la station mobile en passe d'établir un nouvel appel est alors synchronisée avec la station émettrice d'un appel qui se situe la plus éloignée d'elle car le niveau de champ ou de qualité d'un signal reçu par une station mobile est le plus souvent lié à la distance entre cette station mobile et la station mobile émettrice de l'appel en cours sur la fréquence sélectionnée. Ainsi, la zone géographique sur laquelle les stations mobiles sont synchronisées s'accroît si la station émettrice de l'appel sur la fréquence sélectionnée n'est pas synchronisée avec ladite station mobile en passe d'établir un nouvel appel.

D'un autre côté, il peut être préféré par un fournisseur de service que cette zone géographique ne soit pas étendue. La fréquence sélectionnée sera alors choisie selon le niveau de champ et de qualité de signal le plus fort, c'est-à-dire la fréquence de la station mobile qui se situe la plus proche de la station mobile en passe d'établir un nouvel appel.

Selon un deuxième mode de réalisation de ladite étape d'inspection de fréquence, chaque fréquence obtenue est inspectée de manière à déterminer le ou les *slots* qui ne sont pas réservés pour un ou des appels en cours sur cette fréquence.

Ce mode est avantageux car il permet de répartir les appels sur les différentes fréquences obtenues.

Par exemple, une fréquence inspectée est alors sélectionnée selon le nombre d'appels en cours sur cette fréquence.

Selon un autre exemple, la fréquence sélectionnée est la fréquence inspectée qui a le nombre d'appels en cours le plus faible. Les appels sont alors répartis de manière uniforme sur les fréquences obtenues.

Selon un premier mode de réalisation de ladite étape de sélection de *slot* le *slot* sélectionné de la fréquence sélectionnée est obtenu suite à l'envoi d'une requête de ladite station mobile vers une autre station mobile.

Ce mode de réalisation est avantageux car il permet au fournisseur de service d'appels directs de pouvoir déléguer la responsabilité de l'allocation de *slots* de certaines fréquences à certaines stations mobiles du système de téléphonie directe. Le fournisseur peut alors, par exemple, par zone géographique déléguer l'allocation des *slots* d'une fréquence particulière à une ou quelques stations mobiles.

Selon un deuxième mode de réalisation de ladite étape de sélection de *slot,* le *slot* sélectionné de la fréquence sélectionnée est un des *slots* de ladite fréquence sélectionnée qui sont autorisés à être réservés pour l'établissement dudit appel.

Ce mode est particulièrement avantageux pour un fournisseur de service d'appels directs car il lui permet de réserver certains *slots* de certaines fréquences à des usages particuliers tels que l'émission d'appels correspondants à des numéros d'urgence.

Selon un troisième mode de réalisation de ladite étape de sélection de *slot,* le *slot* sélectionné de la fréquence sélectionnée est obtenu selon une règle pré-établie de sélection de *slots.*

Par exemple, ladite règle de sélection de *slots* est établie de manière à ce que certains *slots* soient sélectionnés en dernier. Par exemple, dans le cas d'un système de téléphonie directe basé sur les normes GSM, les *slots* extrêmes (*slot* 0 ou 7) peuvent être sélectionnés uniquement une fois que les *slots* intermédiaires de ladite fréquence sélectionnée ont été réservés par d'autres stations mobiles dudit système pour des appels sur ladite fréquence sélectionnée.

Selon un autre exemple, ladite règle de sélection de *slots* est établie de manière à obtenir une répartition uniforme de la réservation des *slots* sur ladite fréquence sélectionnée.

Un système de téléphonie mobile directe du type où l'allocation des ressources radio consiste en outre à réserver, pour l'émission des données relatives à un appel, un des *slots* d'une trame qui divise dans le temps l'utilisation de ladite fréquence, pose le problème de sélectionner des ressources radio (fréquence et *slot*) qui sont déjà utilisées par une autre station mobile émettrice d'un appel sur la même fréquence et que les deux stations mobiles se trouvent à portée l'une de l'autre. De plus, on peut noter que dans un tel système de téléphonie, toutes les stations mobiles à portée les unes des autres doivent être synchronisées entre elles en temps afin d'éviter qu'un *slot* dédié à l'émission des données utiles d'un appel par une de ces stations ne chevauche le *slot* suivant qui serait dédié à l'émission des données utiles d'un autre appel par une autre de ces stations mobiles. Ce problème d'allocation de ressources radio communes est généralement appelé problème de collision synchrone d'accès aux ressources radio.

Dans l'invention lors de l'étape de détection de collision synchrone d'accès aux ressources radio, il est vérifié pendant une durée pré-établie, au cours de ce *slot* de synchronisation, si lesdites données de synchronisation S sont reçues. Dans le cas où il est détecté que lesdites données de synchronisation sont reçues par la station mobile au cours dudit *slot* de synchronisation, une collision synchrone d'accès aux ressources radio est détectée.

Lorsque ladite durée est expirée, il est considéré qu'aucune collision synchrone d'accès aux ressources radio n'est détectée. Dans le cas où aucune collision synchrone d'accès aux ressources radio n'a été détectée au cours de ladite étape de détection de collision synchrone d'accès aux ressources radio, ladite étape de détection de collision est suivie d'une étape de vérification de signaux modulés par la fréquence sélectionnée.

Dans le cas où la fréquence sélectionnée module au moins un signal porteur des données d'un appel, l'étape de vérification de signaux modulés par la fréquence sélectionnée est suivie par une étape d'obtention des données de synchronisation relative à ladite fréquence sélectionnée à partir d'une station émettrice d'un appel sur ladite fréquence sélectionnée.

Dans le cas où la fréquence sélectionnée ne module aucun signal porteur de données d'un appel, l'étape de vérification de signaux modulés par la fréquence sélectionnée est suivie par une étape de définition des données de synchronisation relative à ladite fréquence sélectionnée.

De plus, dans le cas où une collision synchrone d'accès aux ressources radio a été détectée au cours de ladite étape de détection de collision, il est vérifié si tous les *slots* de la fréquence sélectionnée ont été considérés. Si ce n'est pas le cas, l'étape de sélection de *slot* est à nouveau exécutée en considérant un autre *slot* de la fréquence sélectionnée. Si c'est le cas, il est vérifié si toutes les fréquences obtenues ont été considérées. Si ce n'est pas le cas, l'étape de sélection de fréquence est à nouveau exécutée en considérant une autre des fréquences obtenues. Dans le cas contraire, le procédé s'arrête et l'établissement de l'appel ne peut aboutir. Une indication de cet - échec est éventuellement présentée à l'utilisateur à l'origine de l'initiation de l'établissement de cet appel.

Selon une variante de la présente invention, dans le cas où toutes les fréquences obtenues ont été considérées, une étape de préemption de ressources radio est mise en oeuvre. Au cours de cette étape, une station mobile à portée de ladite station et émettrice d'un appel sur un *slot* d'une fréquence attribuée, par exemple la dernière sélectionnée, est préemptée, c'est-à-dire que ledit *slot* de ladite fréquence utilisée jusque là par ladite station mobile préemptée est alors utilisé par ladite station mobile pour établir son appel. Ladite station mobile préemptée est alors amenée à changer de ressources radio. L'étape de préemption est alors suivie de l'étape de vérification de signaux modulés par la fréquence sélectionnée.

Selon une variante de ladite étape de préemption, toutes les stations mobiles à portée de ladite station et émettrices d'appel sur une fréquence obtenue, par exemple la dernière fréquence sélectionnée, sont préemptées. L'étape de préemption est alors suivie de l'étape de sélection de *slot.*

La présente invention concerne également une station mobile telle que décrit dans la revendication 14.

De plus, l'invention concerne un système de téléphonie mobile directe tel que décrit dans la revendication 16.

Enfin, la présente invention concerne un programme d'ordinateur stocké sur un support d'informations, tel que décrit dans la revendication 17.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est un schéma d'un exemple de système de téléphonie mobile directe,
la Fig. 2 est un schéma d'un exemple de trame TDMA du système GSM,
la Fig. 3 représente un exemple d'organisation de la multitrame système d'un système de téléphonie mobile directe basé sur les normes GSM,
la Fig. 4 représente un schéma des étapes du procédé d'allocation de ressources radio nécessaires à l'émission d'un appel par une station mobile d'un système de téléphonie mobile directe selon la présente invention, et
la Fig. 5 représente une station mobile selon la présente invention.

Par la suite, l'invention est décrite dans le cas particulier de réalisation où le système de téléphonie mobile directe SYST de la Fig. 1 est du type à accès multiple par division de temps (TDMA). De plus, on considère par la suite que N fréquences f1,...,fN ont été attribuées pour le système de téléphonie mobile directe SYST.

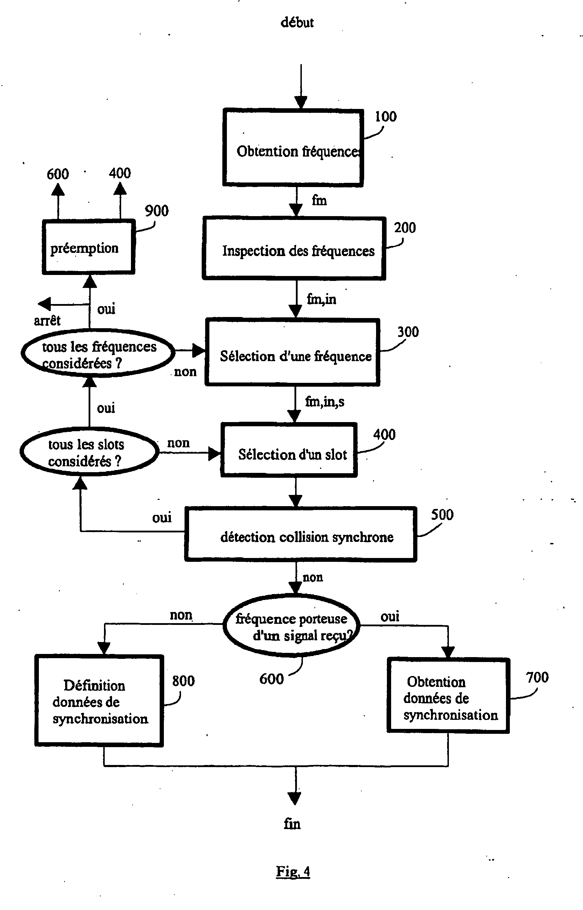

La Fig. 4 représente un schéma des étapes du procédé d'allocation de ressources radio pour l'établissement d'un appel émis sur une fréquence par une station mobile TRDi du système de téléphonie mobile directe SYST, selon la présente invention. Le procédé débute par une étape 100 d'obtention de fréquences au cours de laquelle au moins une fréquence fm parmi les fréquences attribuées f1,...,fN, c'est-à-dire une fréquence sur laquelle ledit appel est susceptible d'être émis, est obtenue. Le procédé comporte également une étape 200 d'inspection de fréquence au cours de laquelle chaque fréquence fm ainsi obtenue est inspectée, une étape 300 de sélection de fréquence au cours de laquelle une desdites fréquences fin,in ainsi inspectées est sélectionnée, une étape 400 de sélection de *slot* au cours de laquelle un des *slots* sₖ de la trame relative à ladite fréquence ainsi sélectionnée fin,in,s est sélectionné, et une étape 500 de détection de collision synchrone d'accès aux ressources radio au cours de laquelle il est vérifié si ledit *slot* sélectionné sₖ n'est pas déjà utilisé par une autre station mobile TRDj (j≠i) dudit système à portée de ladite station mobile TRDi.

Selon un premier mode de réalisation de l'étape 100 d'obtention de fréquence, chaque fréquence fm est une fréquence sur laquelle ledit appel est autorisé à être établi.

L'appel qui peut être émis par une station mobile TRDi peut être un appel point à point, c'est-à-dire que la station mobile TRDi communique directement avec une autre station mobile TRDj (j≠i), ou être un appel de groupe, c'est-à-dire que la station mobile TRDi diffuse son appel vers d'autres stations mobiles qui sont à sa portée. Un fournisseur de service d'appels directs peut, selon ce premier mode de réalisation de l'étape 100, réserver certaines fréquences attribuées aux appels point à point et d'autres fréquences attribuées aux appels de groupe. Il peut également réserver des fréquences attribuées pour des usages particuliers tels que l'émission d'appels correspondant à des numéros d'urgence. Lors de son abonnement auprès de ce fournisseur de service, l'usager peut alors, au travers d'une carte mémoire qui lui est propre, mémoriser les fréquences autorisées pour chaque type d'appel auquel il a souscrit.

Selon un deuxième mode de réalisation de l'étape 100 d'obtention de fréquence, au cours de ladite étape 100 au moins une fréquence fm est obtenue suite à l'envoi d'une requête de la station mobile TRDi vers une autre station mobilc TRDj (j≠i).

Ce mode de réalisation est avantageux car il permet au fournisseur de service d'appels directs de pouvoir déléguer la responsabilité de la sélection de fréquences attribuées à certaines stations mobiles du système de téléphonie mobile directe. Le fournisseur peut alors, par exemple par zone géographique, déléguer la sélection de ces fréquences sur cette zone géographique à une ou quelques stations mobiles habituellement présentes dans cette zone géographique.

Selon un troisième mode de réalisation de l'étape 100 d'obtention de fréquence, au cours de l'étape 100 au moins une fréquence fm est obtenue à partir d'une mémoire de la station mobile TRDi.

Selon un premier mode de réalisation de l'étape 200 d'inspection de fréquence, le niveau de champ ou de la qualité des signaux modulés par chacune des fréquences obtenues fin et reçus par ladite station mobile est mesuré. Au cours de l'étape 300 de sélection de fréquence, une fréquence fm,in ainsi inspectée est alors sélectionnée, selon un mode de réalisation de l'étape 300 de sélection de fréquence, selon la valeur de la mesure du niveau de champ ou de la qualité des signaux reçus qu'elle module.

Selon un deuxième mode de réalisation de l'étape 200 d'inspection de fréquence, chaque fréquence obtenue fm est inspectée de manière à déterminer le ou les *slots* qui ne sont pas réservés pour un ou des appels en cours sur cette fréquence.

Ce mode est particulièrement avantageux car il permet à la station mobile TRDi de déterminer ainsi les *slots* libres sur cette fréquence fm. Au cours de l'étape 300 de sélection de fréquence, une fréquence inspectée fm,in est alors sélectionnée, selon un mode de réalisation de l'étape 300 de sélection de fréquence, selon le nombre d'appels en cours sur cette fréquence. La station mobile TRDi peut ainsi sélectionner une fréquence de manière à ce que les appels en cours soient répartis sur les différentes fréquences obtenues. Par exemple, si la fréquence sélectionnée est la fréquence inspectée qui a le nombre d'appels en cours le plus faible, c'est-à-dire le nombre de *slots* libres le plus important, les appels en cours sont répartis équitablement sur les fréquences attribuées au système de téléphonie directe SYST.

Selon un premier mode de réalisation de l'étape 400 de sélection de *slot,* le *slot* sélectionné sₖ de la fréquence sélectionnée fm,in,s est obtenu suite à l'envoi d'une requête de ladite station mobile TRDi vers une autre station mobile TRDj (j≠i).

Selon un deuxième mode de réalisation de l'étape 400 de sélection de *slot*, le *slot* sélectionné sₖ de la fréquence sélectionnée fm,in,s est un des *slots* de ladite fréquence sélectionnée qui sont autorisés à être réservés pour l'établissement de l'appel par la station mobile TRDi.

Selon un troisième mode de réalisation de l'étape 400 de sélection de *slot,* le *slot* sélectionné sₖ de la fréquence sélectionnée fm,in,s est obtenu selon une règle pré-établie de sélection de *slots.*

Par exemple, ladite règle de sélection de *slots* est établie de manière à ce que certains *slots* soient sélectionnés en dernier. Par exemple, dans le cas d'un système de téléphonie directe basé sur les normes GSM, les *slots* extrêmes (*slot* 0 ou 7) peuvent être sélectionnés uniquement une fois que les *slots* intermédiaires de ladite fréquence sélectionnée ont été réservés par d'autres stations mobiles dudit système pour des appels sur ladite fréquence sélectionnée.

Selon un autre exemple, ladite règle de sélection de *slots* est établie de manière à obtenir une répartition uniforme de la réservation des *slots* sur ladite fréquence sélectionnée.

Une fois qu'un *slot* sₖ a été sélectionné, l'étape 400 de sélection de *slot* est suivie d'une étape 500 de détection de collision synchrone d'accès aux ressources radio. Une collision synchrone d'accès aux ressources radio est ici définie comme étant détectée lorsque deux stations mobiles à portée l'une de l'autre émettent sur le même *slot* de la même fréquence provoquant ainsi des interférences co-canal qui rendent les deux appels inaudibles pour les stations réceptrices de ces deux appels. Cette étape 500 peut paraître inutile lorsqu'au cours de l'étape 200 d'inspection de fréquence, les *slots* réservés sont déterminés par la station mobile TRDi. Cependant, elle ne l'est pas car, du fait de la décentralisation de l'allocation des ressources radio, le cas peut-se produire où deux stations mobiles s'allouent simultanément le même *slot* d'une même fréquence laissé libre jusque là.

Le procédé, selon un mode de réalisation de la présente invention, est destiné à être mis en oeuvre par chaque station mobile TRDi utilisée dans un système de téléphonie mobile directe à accès multiple par division de temps, c'est-à-dire un système dans lequel les ressources radio nécessaires pour l'émission d'un appel Aj sont constituées d'une fréquence fi sur laquelle l'appel Aⱼ est émis, d'un *slot* sⱼ de la trame TDMA au cours duquel les données utiles relatives à l'appel Aⱼ sont envoyées et d'un *slot* de synchronisation s_{j,1} de la multitrame M₀, au cours duquel l'information de synchronisation S est envoyée.

Selon un mode de réalisation de l'étape 500 de détection de collision synchrone d'accès aux ressources radio, il est vérifié pendant une durée pré-établie D au cours de ce *slot* de synchronisation si lesdites données de synchronisation S sont reçues. Dans le cas où il est détecté que lesdites données de synchronisation sont reçues par la station mobile au cours dudit *slot* de synchronisation, une collision synchrone d'accès aux ressources radio est détectée.

Lorsque ladite durée est expirée, il est considéré qu'aucune collision synchrone d'accès aux ressources radio n'est détectée. Dans le cas où aucune collision synchrone d'accès aux ressources radio n'a été détectée au cours de ladite étape de détection de collision synchrone d'accès aux ressources radio, ladite étape de détection de collision est suivie d'une étape 600 de vérification de signaux modulés par la fréquence sélectionnée fm,in,s.

Dans ce cas, l'étape 600 est suivie d'une étape 700 d'obtention des données de synchronisation relative à ladite fréquence sélectionnée à partir d'une station émettrice d'un appel sur ladite fréquence sélectionnée. La station mobile TRDi peut ainsi se synchroniser avec cette station émettrice.

Dans le cas où la fréquence sélectionnée fm,in,s ne module aucun signal porteur de données d'un appel, l'étape 600 est suivie d'une étape 800 de définition des données de synchronisation relative à ladite fréquence sélectionnée fm,in,s.

Dans le cas particulier d'un système de téléphonie directe basé sur les normes GSM, la station mobile TRDi crée une multitrame système M₀ relative à la fréquence sélectionnée et réserve sept *slots* de cette multitrame M₀.

Le procédé d'allocation de ressources radio selon la présente invention est un - procédé qui est itéré dans le cas où une collision synchrone d'accès aux ressources radio a été détecté au cours de l'étape 500 de détection de collision synchrone d'accès aux ressources radio. Ainsi, lorsqu'une collision synchrone d'accès aux ressources radio est détecté, il est vérifié si tous les *slots* de la fréquence sélectionnée fin,in,s ont été considérés. Si ce n'est pas le cas, l'étape 400 de sélection de *slot* est à nouveau exécutée en considérant un autre *slot* de la fréquence sélectionnée. Si c'est le cas, il est vérifié si toutes les fréquences obtenues fin ont été considérées. Si ce n'est pas le cas, l'étape 300 de sélection de fréquence est à nouveau exécutée en considérant une autre des fréquences obtenues. Dans le cas contraire le procédé s'arrête et l'établissement de l'appel ne peut aboutir. Une indication de cet échec est éventuellement présentée à l'utilisateur à l'origine de l'initiation de l'établissement de cet appel.

Selon une variante de la présente invention, dans le cas où toutes les fréquences obtenues ont été considérées, une étape 900 de préemption de ressources radio est mise en oeuvre. Au cours de cette étape, une station mobile TRDj à portée de ladite station TRDi et émettrice d'un appel sur un *slot* d'une fréquence obtenue, par exemple la dernière sélectionnée, est préemptée, c'est-à-dire que ledit *slot* de ladite fréquence utilisée jusque là par ladite station mobile TRDj est alors utilisé par ladite station mobile TRDi pour établir son appel. Ladite station mobile TRDj est alors amenée à changer de ressources radio. L'étape 900 de préemption est alors suivie de l'étape 600 de vérification de signaux modulés par la fréquence sélectionnée.

Selon une variante de ladite étape de préemption, toutes les stations mobiles TRDj à portée de ladite station TRDi et émettrices d'appel sur une fréquence obtenue, par exemple la dernière fréquence sélectionnée, sont préemptées. L'étape de préemption est alors suivie de l'étape 400 de sélection de *slot.*

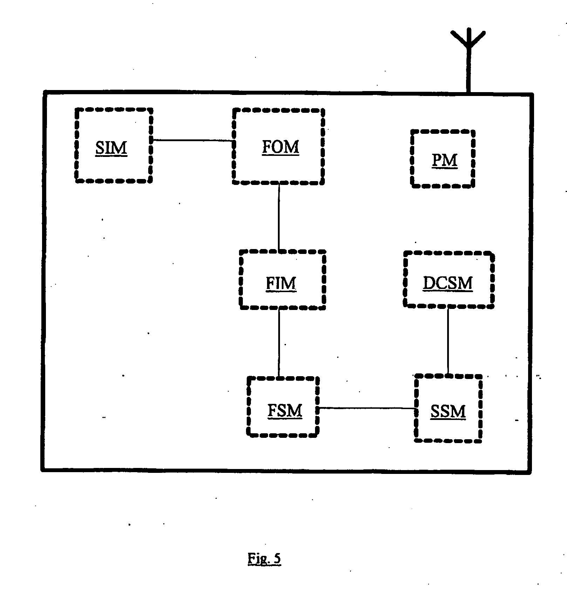

La Fig. 5 représente la station mobile TRDi selon la présente invention. La station mobile TRDi, qui est de manière non limitative un téléphone ou un ordinateur portable, est destinée à être utilisée dans un système de téléphonie mobile directe tel que par exemple le système SYST précédemment décrit.

La station mobile TRDi comporte des moyens FOM pour obtenir au moins une fréquence fin sur laquelle un appel est susceptible d'être émis.

Selon un mode de réalisation de la station mobile TRDi, les moyens FOM permettent à la station mobile TRDi que chaque fréquence obtenue sur laquelle ledit appel est susceptible d'être émis soit une fréquence sur laquelle ledit appel est autorisé à être établi.

Selon un autre mode de réalisation de la station mobile TRDi, les moyens FOM permettent à la station mobile TRDi qu'au moins une fréquence soit obtenue suite à l'envoi d'une requête vers une autre station mobile.

Selon un autre mode de réalisation de la station mobile TRDi, les moyens FOM permettent à la station mobile TRDi qu'au moins une fréquence soit obtenue à partir d'une mémoire de ses mémoires. Par exemple, dans le cas où la station mobile TRDi est un téléphone, cette mémoire est une mémoire amovible telle que la carte SIM (Subscriber Identity Module).

La station mobile TRDi comporte également des moyens FTM pour inspecter chaque fréquence fin ainsi obtenue et des moyens FSM pour sélectionner une desdites fréquences ainsi inspectées fm,in.

Selon un mode de réalisation de la station mobile TRDi, les moyens FIM permettent à la station mobile TRDi de mesurer le niveau de champ ou la qualité des signaux modulés par chaque fréquence obtenue fin et reçus par ladite station mobile.

Dans ce cas, selon un mode de réalisation, les moyens FSM permettent, selon un premier exemple, de sélectionner une fréquence obtenue selon là valeur de la mesure du niveau de champ ou la qualité des signaux reçus qu'elle module.

Selon un autre mode de réalisation de la station mobile TRDi, les moyens FIM permettent à la station mobile TRDi de déterminer le ou les *slots* qui ne sont pas réservés pour un ou des appels en cours sur chaque fréquence obtenue fm.

La station comporte, également, des moyens SSM pour sélectionner un des *slots* de la trame relative à la fréquence ainsi sélectionnée fin,in,s.

Selon un mode de réalisation de la station mobile TRDi, les moyens SSM permettent à la station mobile TRDi d'obtenir le *slot* sélectionné de la fréquence sélectionnée suite à l'envoi d'une requête vers une autre station mobile.

Selon un autre mode de réalisation de la station mobile TRDi, les moyens SSM permettent à la station mobile TRDi d'obtenir le *slot* sélectionné de la fréquence sélectionnée parmi un des *slots* de ladite fréquence sélectionnée qui sont autorisés à être réservés pour l'établissement dudit appel.

Selon un autre mode de réalisation de la station mobile TRDi, les moyens SSM permettent à la station mobile TRDi d'obtenir le *slot* sélectionné de la fréquence sélectionnée selon une règle pré-établie de sélection de *slots* dont des exemples ont été précédemment donnés.

La station comporte aussi des moyens DCSM pour détecter une collision - synchrone d'accès aux ressources radio. Ces moyens permettent à la station mobile de vérifier si le *slot* sélectionné de la fréquence sélectionnée n'est pas déjà utilisé par une _ autre station mobile dudit système à portée de ladite station mobile. Un mode de réalisation a été précédemment expliqué.

Selon un autre mode de réalisation de la station mobile TRDi, la station mobile TRDi comporte en outre des moyens PM pour préempter une autre station mobile qui se situe à sa portée.

## Revendications

1. Procédé d'allocation de ressources radio pour l'établissement d'un appel émis sur une fréquence par une station mobile d'un système de téléphonie mobile directe, le procédé comportant
- une étape (100) d'obtention de fréquences au cours de laquelle au moins une fréquence sur laquelle ledit appel est susceptible d'être émis est obtenue,
- une étape (200) d'inspection de fréquence au cours de laquelle chaque fréquence ainsi obtenue est inspectée,
- une étape (300) de sélection de fréquence au cours de laquelle une desdites fréquences ainsi inspectées est sélectionnée,
**caractérisé en ce que** le système de téléphonie mobile directe est du type où l'allocation desdites ressources consiste, en outre, à réserver pour l'émission des données relatives audit appel, un des *slots* d'une trame qui divise dans le temps l'utilisation de ladite fréquence, et à réserver un slot, dit slot de synchronisation, d'une multitrame du système au cours duquel une information de synchronisation est envoyée, et **en ce qu'**il comporte :
- une étape (400) de sélection de *slot* au cours de laquelle un des *slots* de la trame relative à la fréquence ainsi sélectionnée est sélectionné, et
- une étape (500) de détection de collision synchrone d'accès aux ressources radio au cours de laquelle il est vérifié pendant une durée pré-établie (D) au cours de ce slot de synchronisation si ladite information de synchronisation est reçue, une collision synchrone est alors détectée si ladite information de synchronisation est reçue et aucune collision synchrone n'est détectée si ladite information de synchronisation n'est reçue à l'expiration de la durée pré-établie.

2. Procédé d'allocation de ressources radio selon la revendication 1, **caractérisé en ce que**, au cours de ladite étape (100) d'obtention de fréquences, chaque fréquence obtenue sur laquelle ledit appel est susceptible d'être émis est une fréquence sur laquelle ledit appel est autorisé à être établi.

3. Procédé d'allocation de ressources radio selon la revendication 1 ou 2, **caractérisé en ce qu'**au cours de ladite étape (100) d'obtention de fréquences, au moins une fréquence est obtenue suite à l'envoi d'une requête de ladite station mobile vers une autre station mobile.

4. Procédé d'allocation de ressources radio selon l'une des revendications 1à 3, **caractérisé en ce qu'**au moins une fréquence est obtenue à partir d'une mémoire de ladite station mobile.

5. Procédé d'allocation de ressources radio selon l'une des revendications 1 à 4, **caractérisé en ce qu'**au cours de ladite étape (200) d'inspection de fréquence le niveau de champ ou la qualité des signaux modulés par chacune desdites fréquences obtenues et reçus par ladite station mobile est mesuré.

6. Procédé d'allocation de ressources radio selon la revendication 5, **caractérisé en ce qu'**au cours de ladite étape de sélection de fréquences, une fréquence ainsi inspectée est sélectionnée selon la valeur de la mesure du niveau de champ ou la qualité des signaux reçus qu'elle module.

7. Procédé d'allocation de ressources radio selon l'une des revendications 1 à 6, **caractérisé en ce qu'**au cours de ladite étape (200) d'inspection de fréquence, chaque fréquence obtenue est inspectée de manière à déterminer le ou les *slots* qui ne sont pas réservés pour un ou des appels en cours sur cette fréquence.

8. Procédé d'allocation de ressources radio selon l'une des revendications 1 à 7, **caractérisé en ce qu'**au cours de ladite étape (300) de sélection de *slot,* le *slot* sélectionné de la fréquence sélectionnée est obtenu suite à l'envoi d'une requête de ladite station mobile vers une autre station mobile.

9. Procédé d'allocation de ressources radio selon l'une des revendications 1 à 7, **caractérisé en ce qu'**au cours de ladite étape (300) de sélection de *slot,* le *slot* sélectionné de la fréquence sélectionnée est un des *slots* de ladite fréquence sélectionnée qui sont autorisés à être réservés pour l'établissement dudit appel.

10. Procédé d'allocation de ressources radio selon l'une des revendications 1 à 7, **caractérisé en ce qu'**au cours de ladite étape de sélection de *slot,* le *slot* sélectionné de la fréquence sélectionnée est obtenu selon une règle pré-établie de sélection de *slots.*

11. Procédé d'allocation de ressources radio selon la revendication 10, **caractérisé en ce que** lorsqu'aucune collision synchrone d'accès aux ressources radio n'est détectée au cours de ladite étape (500) de détection de collision synchrone d'accès aux ressources radio, ladite étape (500) de détection de collision est suivie d'une étape (600) de vérification de signaux modulés par la fréquence sélectionnée.

12. Procédé d'allocation de ressources radio selon la revendication 11, **caractérisé en ce que** :
- dans le cas où la fréquence sélectionné module au moins un signal porteur des données d'un appel, ladite étape (600) de vérification de signaux modulés par la fréquence sélectionnée est suivie par une étape (700) d'obtention des données de synchronisation relative à ladite fréquence sélectionnée à partir d'une station émettrice d'un appel sur ladite fréquence sélectionnée, et
- dans le cas où la fréquence sélectionnée ne module aucun signal porteur de données d'un appel, ladite étape (600) de vérification de signaux modulés par la fréquence sélectionnée est suivie par une étape (800) de définition des données de synchronisation relative à ladite fréquence sélectionnée.

13. Procédé d'allocation de ressources radio selon l'une des revendications 1 à 7, aucune des fréquences obtenues ne pouvant être utilisée pour l'émission dudit appel, **caractérisé en ce qu'**il comporte une étape (900) de préemption de ressources radio au cours de laquelle, au moins une station mobile à portée de ladite station et émettrice d'un appel sur un *slot* d'une fréquence obtenue, par exemple la dernière sélectionnée, est préemptée.

14. Station mobile d'un système de téléphonie mobile directe comportant des moyens (FOM) pour obtenir au moins une fréquence sur laquelle un appel est susceptible d'être émis, des moyens (FIM) pour inspecter chaque fréquence ainsi obtenue, des moyens (FSM) pour sélectionner une desdites fréquences ainsi inspectées, **caractérisée en ce que** le système de téléphonie directe estdu type où l'allocation des ressources pour l'établissement de son appel émis sur une fréquence consiste en outre à réserver, pour l'émission des données relatives audit appel, un des *slots* d'une trame qui divise dans le temps l'utilisation de ladite fréquence, et à réserver un slot, dit slot de synchronisation, d'une multitrame du système au cours duquel une information de synchronisation est envoyée, et **en ce qu'**elle comporte des moyens (SSM) pour sélectionner un des *slots* de la trame relative à la fréquence ainsi sélectionnée et des moyens (DCSM) permettant à ladite station mobile de vérifier pendant une durée pré-établie (D) au cours de ce slot de synchronisation si ladite information de synchronisation est reçue, une collision synchrone est alors détectée si ladite information de synchronisation est reçue et aucune collision synchrone n'est détectée si ladite information de synchronisation n'est reçue à l'expiration de la durée pré-établie.

15. Station mobile selon la revendication 14, **caractérisée en ce qu'**elle comporte des moyens (PM) pour préempter une autre station mobile qui se situe à sa portée.

16. Système de téléphonie mobile directe du type où l'allocation des ressources pour l'établissement d'un appel émis sur une fréquence par une station mobile consiste, en outre, à réserver, pour l'émission des données relatives audit appel, un des *slots* d'une trame qui divise dans le temps l'utilisation de ladite fréquence, **caractérisé en ce que** chaque station mobile dudit système susceptible d'émettre un appel est conforme à l'une des revendications 14 ou 15.

17. Programme d'ordinateur stocké sur un support d'informations, **caractérisé en ce qu'**il comporte des instructions permettant de mettre en oeuvre le procédé selon l'une des revendications 1 à 13, lorsqu'il est chargé et exécuté par une station mobile d'un système de téléphonie mobile directe.

## Claims

1. Method for allocation of radio resources for placing a call transmitted over a frequency by a mobile station of a direct mobile telephony system, the method comprising
- a frequency obtaining step (100) during which at least one frequency over which said call is capable of being transmitted is obtained,
- a frequency inspection step (200) during which each frequency thus obtained is inspected,
- a frequency selection step (300) during which one of said frequencies thus inspected is selected,
**characterised in that** the direct mobile telephony system is of the type in which the allocation of the said resources further consists in reserving, for the transmission of the data relating to said call, one of the slots in a frame that divides up the use of said frequency in time, and reserving a slot, referred to as the synchronisation slot,
of a multiframe of the system during which synchronisation data is sent, and **in that** it comprises:
- a slot selection step (400) during which one of the slots of the frame relating to the frequency thus selected is selected, and
- a step (500) of detecting synchronous collision of access to the radio resources during which a check is carried out over a pre-established period (D) in the course of this synchronisation slot to find out whether said synchronisation data has been received, a synchronous collision then being detected if said synchronisation data is received and no synchronous collision being detected if said synchronisation data has not been received by the expiry of the pre-established period.

2. Method for allocation of radio resources according to claim 1, **characterised in that** during said frequency obtaining step (100), each frequency obtained over which said call is capable of being transmitted is a frequency over which said call is authorised to be placed.

3. Method for allocation of radio resources according to claim 1 or 2, **characterised in that** during said frequency obtaining step (100), at least one frequency is obtained following the sending of a request by said mobile station to another mobile station.

4. Method for allocation of radio resources according to one of claims 1 to 3, **characterised in that** at least one frequency is obtained from a memory in said mobile station.

5. Method for allocation of radio resources according to one of claims 1 to 4, **characterised in that** during said frequency inspection step (200) the field level or quality of the signals modulated by each of the said frequencies obtained and received by the said mobile station is measured.

6. Method for allocation of radio resources according to claim 5, **characterised in that** during said frequency selection step, a frequency thus inspected is selected according to the value of the measurement of the field level or the quality of the signals received which it modulates.

7. Method for allocation of radio resources according to one of claims 1 to 6, **characterised in that** during said frequency inspection step (200), each frequency obtained is inspected so as to determine the slot or slots which are not reserved for one or more calls in progress on this frequency.

8. Method for allocation of radio resources according to one of claims 1 to 7, **characterised in that** during said slot selection step (300), the selected slot of the selected frequency is obtained following the sending of a request by said mobile station to another mobile station.

9. Method for allocation of radio resources according to one of claims 1 to 7, **characterised in that** during said slot selection step (300), the selected slot of the selected frequency is one of the slots of said selected frequency which are authorised to be reserved for the placing of said call.

10. Method for allocation of radio resources according to one of claims 1 to 7, **characterised in that** during the said slot selection step, the selected slot of the selected frequency is obtained according to a pre-established rule of slot selection.

11. Method for allocation of radio resources according to claim 10, **characterised in that** when no synchronous collision of access to the radio resources is detected during the said step (500) of detecting synchronous collision of access to the radio resources, the said collision detection step (500) is followed by a step (600) of verifying signals modulated by the selected frequency.

12. Method for allocation of radio resources according to claim 11, **characterised in that** :
- in the event that the selected frequency modulates at least one signal carrying data for a call, the said step (600) of verifying signals modulated by the selected frequency is followed by a step (700) of obtaining synchronisation data relating to the selected frequency from a transmitting station of a call over said selected frequency, and
- in the event that the selected frequency does not modulate any signal carrying data for a call, the said step (600) of verifying signals modulated by the selected frequency is followed by a step (800) of defining the synchronisation data relating to said selected frequency.

13. Method for allocation of radio resources according to one of claims 1 to 7, where none of the frequencies obtained can be used for the transmission of said call, **characterised in that** it comprises a step (900) of pre-empting radio resources in the course of which at least one mobile station within range of said station and transmitting a call in a slot of a frequency obtained, for example the last one selected, is pre-empted.

14. Mobile station of a direct mobile telephony system comprising means (FOM) for obtaining at least one frequency over which a call is capable of being transmitted, means (FIM) for inspecting each frequency thus obtained, means (FSM) for selecting one of said frequencies thus inspected, **characterised in that** the direct telephony system is of the type in which the allocation of resources for placing its call transmitted over a frequency further consists in reserving, for the transmission of the data relating to said call, one of the slots of a frame which divides up the use of said frequency in time, and reserving a slot, referred to as the synchronisation slot,
of a multiframe of the system during which synchronisation data is sent, and **in that** it comprises means (SSM) for selecting one of the slots of the frame relating to the frequency thus selected and means (DCSM) enabling said mobile station to verify, over a pre-established period (D) during this synchronisation slot, whether said synchronisation data is received, a synchronous collision being detected if said synchronisation information is received, and no synchronous collision being detected if said synchronisation information has not been received by the expiry of the pre-established period.

15. Mobile station according to claim 14, **characterised in that** it comprises means (PM) for pre-empting another mobile station that is within its range.

16. Direct mobile telephony system of the type in which the allocation of the resources for placing a call transmitted over a frequency by a mobile station further consists in reserving, for the transmission of the data relating to said call, one of the slots of a frame which divides up the use of said frequency in time, **characterised in that** each mobile station of said system capable of transmitting a call is as claimed in one of claims 14 or 15.

17. Computer program stored on a data carrier, **characterised in that** it comprises instructions enabling the method according to one of claims 1 to 13 to be implemented when it is loaded and run by a mobile station of a direct mobile telephony system.

## Patentansprüche

1. Verfahren zur Zuteilung von Funkressourcen für die Herstellung eines Anrufs, der von einer mobilen Station eines Systems für direkten Mobilfunk ausgesendet wird, welches Verfahren umfasst:
- einen Schritt (100) zum Erhalten von Frequenzen, während dem mindestens eine Frequenz, auf der der Anruf ausgesendet werden kann, erhalten wird,
- einen Schritt (200) zur Frequenzprüfung, während dem jede so erhaltene Frequenz geprüft wird,
- einen Schritt (300) zur Frequenzauswahl, während dem eine der so geprüften Frequenzen ausgewählt wird,
**dadurch gekennzeichnet, dass** das System für direkten Mobilfunk des Typs ist, bei dem die Zuteilung der Funkressourcen unter anderem darin besteht, für das Aussenden der auf den Anruf bezogenen Daten einen der *Slots* eines Rasters zu reservieren, der die Verwendung der Frequenz zeitlich unterteilt, und einen als Synchronisations-Slot bezeichneten Slot eines Vielfachrasters des Systems zu reservieren, in dessen Verlauf eine Synchronisationsinformation gesendet wird, und **dadurch**, dass es umfasst:
- einen Schritt (400) zur *Slot*-Auswahl, während dem einer der *Slots* des Rasters in Bezug auf die so ausgewählte Frequenz ausgewählt wird, und
- einen Schritt (500) zur Erfassung einer Synchron-Kollision eines Zugriffs auf die Funkressourcen, während dem im Lauf einer voreingestellten Dauer (D) im Verlauf dieses Synchronisations-Slots überprüft wird, ob die Synchronisationsinformation empfangen wurde, wobei eine Synchron-Kollision erfasst wird, wenn die Synchronisationsinformation empfangen wurde, und keine Synchron-Kollision erfasst wird, wenn die Synchronisationsinformation bei Ablauf der voreingestellten Dauer nicht empfangen wurde.

2. Verfahren zur Zuteilung von Funkressourcen nach Anspruch 1, **dadurch gekennzeichnet, dass** während des Schritts (100) zum Erhalten von Frequenzen jede erhaltene Frequenz, auf der der Anruf ausgesendet werden kann, eine Frequenz ist, auf der es gestattet ist, den Anruf herzustellen.

3. Verfahren zur Zuteilung von Funkressourcen nach Anspruch 1 oder 2, **dadurch gekennzeichnet, dass** während des Schritts (100) zum Erhalten von Frequenzen mindestens eine Frequenz im Anschluss an das Aussenden einer Anforderung von einer mobilen Station an eine andere mobile Station erhalten wird.

4. Verfahren zur Zuteilung von Funkressourcen nach einem der Ansprüche 1 bis 3, **dadurch gekennzeichnet, dass** mindestens eine Frequenz aus einem Speicher der mobilen Station erhalten wird.

5. Verfahren zur Zuteilung von Funkressourcen nach einem der Ansprüche 1 bis 4, **dadurch gekennzeichnet, dass** während des Schritts (200) zur Frequenzprüfung der Feldstärkepegel oder die Qualität der Signale, die durch jede der von der mobilen Station erhaltenen und empfangenen Frequenzen moduliert werden, gemessen wird.

6. Verfahren zur Zuteilung von Funkressourcen nach Anspruch 5, **dadurch gekennzeichnet, dass** während des Schritts zur Frequenzauswahl eine so geprüfte Frequenz nach dem Messwert des Feldstärkepegels bzw. der Qualität der empfangenen Signale, die sie moduliert, ausgewählt wird.

7. Verfahren zur Zuteilung von Funkressourcen nach einem der Ansprüche 1 bis 6, **dadurch gekennzeichnet, dass** während des Schritts (200) zur Frequenzprüfung jede erhaltene Frequenz geprüft wird, um den oder die *Slots* zu ermitteln, die nicht für einen oder mehrere auf dieser Frequenz laufende Anrufe reserviert sind.

8. Verfahren zur Zuteilung von Funkressourcen nach einem der Ansprüche 1 bis 7, **dadurch gekennzeichnet, dass** während des Schritts (300) zur *Slot-*Auswahl der ausgewählte *Slot* der ausgewählten Frequenz im Anschluss an die Aussendung einer Anforderung von der mobilen Station an eine andere mobile Station erhalten wird.

9. Verfahren zur Zuteilung von Funkressourcen nach einem der Ansprüche 1 bis 7, **dadurch gekennzeichnet, dass** während des Schritts (300) zur *Slot-*Auswahl der ausgewählte *Slot* der ausgewählten Frequenz einer der *Slots* der ausgewählten Frequenz ist, die für die Herstellung des Anrufs reserviert werden dürfen.

10. Verfahren zur Zuteilung von Funkressourcen nach einem der Ansprüche 1 bis 7, **dadurch gekennzeichnet, dass** während des Schritts zur *Slot*-Auswahl der ausgewählte *Slot* der ausgewählten Frequenz gemäß einer vorab eingerichteten *Slot*-Auswahlregel erhalten wird.

11. Verfahren zur Zuteilung von Funkressourcen nach Anspruch 10, **dadurch gekennzeichnet, dass**, wenn keine Synchron-Kollision eines Zugriffs auf die Funkressourcen während des Schritts (500) zur Erfassung einer Synchron-Kollision eines Zugriffs auf die Funkressourcen entdeckt wird, auf den Schritt (500) zur Erfassung einer Kollision ein Schritt (600) zur Überprüfung der von der ausgewählten Frequenz modulierten Signale folgt.

12. Verfahren zur Zuteilung von Funkressourcen nach Anspruch 11, **dadurch gekennzeichnet, dass**:
- in dem Fall, in dem die ausgewählte Frequenz mindestens ein Trägersignal der Daten eines Anrufs moduliert, auf den Schritt (600) zur Überprüfung der von der ausgewählten Frequenz modulierten Signale ein Schritt (700) zur Erhaltung der Synchronisationsdaten in Bezug auf die ausgewählte Frequenz von einer Sendestation eines Anrufs auf der ausgewählten Frequenz folgt, und
- in dem Fall, in dem die ausgewählte Frequenz kein Trägersignal von Anrufdaten moduliert, auf den Schritt (600) zur Überprüfung der von der ausgewählten Frequenz modulierten Signale ein Schritt (800) zum Definieren der Synchronisationsdaten relativ zur ausgewählten Frequenz folgt.

13. Verfahren zur Zuteilung von Funkressourcen nach einem der Ansprüche 1 bis 7, wobei keine der erhaltenen Frequenzen für das Aussenden des Anrufs verwendet werden kann, **dadurch gekennzeichnet, dass** es einen Schritt (900) zum Bevorrechtigen von Funkressourcen umfasst, während dem mindestens eine mobile Station in Reichweite der Station und Sendestation eines Anrufs auf einem *Slot* einer erhaltenen Frequenz, beispielsweise der zuletzt ausgewählten, bevorrechtigt wird.

14. Mobile Station eines Systems für direkten Mobilfunk, die Mittel (FOM) zum Erhalten mindestens einer Frequenz, auf der ein Anruf ausgesendet werden kann, Mittel (FIM) zum Prüfen jeder so erhaltenen Frequenz, Mittel (FSM) zum Auswählen einer der so geprüften Frequenzen enthält, **dadurch gekennzeichnet, dass** das System für direkten Mobilfunk des Typs ist, bei dem die Zuteilung der Ressourcen für die Herstellung seines Anrufs, der auf einer Frequenz ausgesendet wird, unter anderem darin besteht, für das Aussenden der zu dem Anruf relativen Daten einen der *Slots* eines Rasters zu reservieren, der die Verwendung der Frequenz zeitlich unterteilt, und einen als Synchronisations-Slot bezeichneten Slot eines Vielfachrasters des Systems zu reservieren, in dessen Verlauf eine Synchronisationsinformation gesendet wird, und **dadurch**, dass sie Mittel (SSM) zum Auswählen eines der *Slots* des Rasters in Bezug auf die so ausgewählte Frequenz aufweist, und Mittel (DCSM), die es der mobilen Station gestatten, während einer voreingestellten Dauer (D) im Verlauf dieses Synchronisations-Slots zu überprüfen, ob die Synchronisationsinformation empfangen wurde, wobei eine Synchron-Kollision erfasst wird, wenn die Synchronisationsinformation empfangen wurde, und keine Synchron-Kollision erfasst wird, wenn die Synchronisationsinformation bei Ablauf der voreingestellten Dauer nicht empfangen wurde.

15. Mobile Station nach Anspruch 14, **dadurch gekennzeichnet, dass** sie Mittel (PM) umfasst, um eine andere mobile Station, die sich in ihrer Reichweite befindet, zu bevorrechtigen.

16. System für direkten Mobilfunk des Typs, bei dem die Zuteilung der Ressourcen für die Herstellung eines Anrufs, der von einer mobilen Station auf einer Frequenz ausgesendet wird, unter anderem darin besteht, für das Aussenden der zu dem Anruf relativen Daten einen der *Slots* eines Rasters zu reservieren, der die Verwendung der Frequenz zeitlich unterteilt, **dadurch gekennzeichnet, dass** jede mobile Station des Systems, die einen Anruf aussenden darf, einem der Ansprüche 14 oder 15 entspricht.

17. Computerprogramm, das auf einem Datenträger gespeichert ist, **dadurch gekennzeichnet, dass** es Anweisungen umfasst, die die Umsetzung des Verfahrens nach einem der Ansprüche 1 bis 13 gestatten, wenn es von einer mobilen Station eines Systems für direkten Mobilfunk geladen und ausgeführt wird.
